# EUROPÄISCHE PATENTANMELDUNG

(11) **EP 1 714 743 A1**
(43) Veröffentlichungstag der Anmeldung: **25.10.2006**
(21) Anmeldenummer: 06003538.3
(22) Anmeldetag: 22.02.2006
(51) Int. Cl.: B24C 3/32, B05B 13/06, B08B 9/04

(54) **Vorrichtung zum Bearbeiten der inneren Oberfläche von rohrförmigen Bauteilen**

(30) Priorität: 22.04.2005 DE 102005018852
(71) Anmelder: SLF Oberflächentechnik GmbH, 09241 Mühlau (DE)
(72) Erfinder: Henkel, Joachim, 09122 Chemnitz (DE); Gansauge, Egon, 09122 Chemnitz (DE)
(74) Vertreter: Linnemann, Winfried

(57) **Zusammenfassung**

Die Erfindung betrifft eine Vorrichtung (1) zum Bearbeiten der inneren Oberfläche (30) von rohrförmigen Bauteilen (3), insbesondere von Rohrmastsektionen für Windkraftanlagen, wobei die Vorrichtung (1) eine Führungseinrichtung (10) umfaßt, die während des Bearbeitens längs durch das Innere des Bauteils (3) verläuft und an der entlang oder mit der mindestens eine Bearbeitungseinheit (2) durch das Bauteil (3) bewegbar ist.

Die neue Vorrichtung (1) ist dadurch gekennzeichnet, daß die Führungseinrichtung (10) durch mindestens ein flexibles, an seinen Enden festlegbares und unter Zugspannung setzbares Führungsmittel (11, 12) gebildet ist.

## Beschreibung

Die vorliegende Erfindung betrifft eine Vorrichtung zum Bearbeiten der inneren Oberfläche von rohrförmigen Bauteilen, insbesondere von Rohrmastsektionen für Windkraftanlagen, wobei die Vorrichtung eine Führungseinrichtung umfaßt, die während des Bearbeitens längs durch das Innere des Bauteils verläuft und an der entlang oder mit der mindestens eine Bearbeitungseinheit durch das Bauteil bewegbar ist.

Eine Vorrichtung der vorstehend genannten Art ist aus der DE 39 39 888 C1 bekannt. Bei dieser bekannten Vorrichtung handelt es sich um eine Einrichtung zum Strahlen der inneren Oberfläche eines Rohres durch Herausschleudern von Strahlgut aus einem umlaufenden Strahlkopf, der längs der Innenseite des Rohres bewegt wird und an einem im Bereich des Strahlkopfes abstützenden Strahlrohr befestigt ist. Weiter ist bei dieser Einrichtung das Strahlrohr in einer es über die ganze Länge unterstützenden Lanze angeordnet. Ferner ist ein verfahrbarer Lanzenwagen vorgesehen und das zu strahlende Rohr ist auf mindestens zwei heb- und senkbaren prismatisch ausgebildeten Böcken gelagert. Schließlich ist eine Einhausung zur Schalldämmung vorgesehen.

Als nachteilig ist bei diesem bekannten Stand der Technik anzusehen, daß die Vorrichtung für ihren Einsatz einen großen, insbesondere sehr langen Raum beansprucht. Diese große Länge des beanspruchten Raums ergibt sich daraus, daß der Raum zum einen das zu bearbeitende Rohr und zum anderen die relativ dazu in Rohrlängsrichtung verfahrbare, zumindest die Länge des Rohrs aufweisende Lanze aufnehmen muß. Daraus ergibt sich, daß der Aufstellungsraum dieser Vorrichtung mindestens doppelt so lang sein muß wie das zu bearbeitende Rohr. Da zunehmend größere rohrförmige Bauteile, beispielsweise als Rohrmastsektionen für Windkraftanlagen, hergestellt werden und bearbeitet werden müssen, führt dies zu Problemen räumlicher Art für die Unterbringung der Vorrichtung und des zu bearbeitenden rohrförmigen Bauteils. Das Errichten von entsprechend großen Hallen erfordert hohe Investitionen; zudem ist es häufig an vorhandenen Standorten auch nicht möglich, vorhandene Hallen nachträglich entsprechend zu vergrößern.

Für die vorliegende Erfindung stellt sich deshalb die Aufgabe, eine Vorrichtung der eingangs genannten Art zu schaffen, die einen verminderten Raumbedarf, insbesondere hinsichtlich der benötigten Raumlänge, aufweist.

Die Lösung dieser Aufgabe gelingt erfindungsgemäß mit einer Vorrichtung der eingangs genannten Art, die dadurch gekennzeichnet ist, daß die Führungseinrichtung durch mindestens ein flexibles, an seinen Enden festlegbares und unter Zugspannung setzbares Führungsmittel gebildet ist.

Mit der vorliegenden Erfindung wird der Vorteil erreicht, daß die Vorrichtung nur noch eine Länge beansprucht, die praktisch mit der Länge des rohrförmigen Bauteils, das bearbeitet werden soll, übereinstimmt. Das flexible Führungsmittel wird nur während der Zeit der Bearbeitung der inneren Oberfläche des rohrförmigen Bauteils durch dieses hindurch verlaufend aufgespannt; wenn die Bearbeitung der inneren Oberfläche des Bauteils beendet ist, wird das Führungsmittel einfach entspannt und dann gelöst und kann dann ohne besonderen Platzbedarf aus dem rohrförmigen Bauteil entfernt werden und dann beispielsweise aufgewickelt werden. Das Führungsmittel selbst wird bei der Bearbeitung der inneren Oberfläche des Bauteils relativ zum Bauteil nicht bewegt, wie dies im Stand der Technik bei einer starren Lanze der Fall ist; lediglich die Bearbeitungseinheit wird entlang des Führungsmittels bewegt.

Bevorzugt ist das Führungsmittel ein Seil oder eine Kette oder ein Gurt. Alle genannten Mittel sind ausreichend flexibel und andererseits bei entsprechender Bemessung in der Lage, die Zugkräfte schadlos aufzunehmen, die für das Tragen und Führen der Bearbeitungseinheit aufgebracht werden müssen.

Weiter schlägt die Erfindung vor, daß die Bearbeitungseinheit einen in Längsrichtung des Führungsmittels an diesem verfahrbaren Tragwagen umfaßt. Hiermit wird die vorteilhafte Möglichkeit geschaffen, daß ein einheitlicher, zu dem Führungsmittel passender Tragwagen mit unterschiedlichen Bearbeitungseinheiten verbunden werden kann, wodurch die Vorrichtung besonders vielfältig einsetzbar wird.

Weiter ist bevorzugt vorgesehen, daß die Bearbeitungseinheit über mindestens eine flexible Leitung mit einer außerhalb des Bauteils angeordneten Versorgungseinheit der Vorrichtung verbunden und von dieser mit Energie und/oder wenigstens einem Arbeitsstoff versorgbar ist, die/der für das Bearbeiten benötigt wird. Auf diese Weise kann die Bearbeitungseinheit besonders kompakt und leicht gehalten werden, weil sie keine eigene Energiequelle und/oder keine eigenen Vorratsbehälter für Arbeitsstoffe mitführen muß.

Damit die Leitung für die Zuführung von Energie und/oder Arbeitsstoff zur Bearbeitungseinheit bei der Bewegung der Bearbeitungseinheit innerhalb des Bauteils keine Schäden erleidet, ist zweckmäßig die mindestens eine flexible Leitung an dem Führungsmittel in dessen Längsrichtung bewegbar getragen und geführt.

Zusätzlich oder alternativ kann vorgesehen sein, daß über eine außerhalb des Bauteils angeordnete Leitungsnachführeinheit die mindestens eine flexible Leitung synchron zu axialen Verfahrbewegungen der Bearbeitungseinheit ausgebbar oder rückziehbar ist. Damit wird gewährleistet, daß immer nur ein gerade passender Längenabschnitt der Leitung sich innerhalb des Bauteils befindet, so daß störende Knicke oder Schlaufen in der Leitung sicher vermieden werden.

Zum Verfahren der Bearbeitungseinheit ist in einer ersten Ausgestaltung der Vorrichtung neben dem Führungsmittel ein Zugmittel vorgesehen, das mit dem Tragwagen und mit einer außerhalb des Bauteils angeordneten Zugmittelantriebseinheit der Vorrichtung verbunden ist. In dieser Ausführung der Vorrichtung wird der Tragwagen bzw. die Bearbeitungseinheit nach Art einer Seilbahn entlang des Führungsmittels bewegt.

Alternativ kann der Tragwagen einen integrierten Antrieb zum Verfahren der Bearbeitungseinheit entlang des Führungsmittels aufweisen. Hierbei kann der Tragwagen beispielsweise einen Elektromotor umfassen, der über die oben erwähnte flexible Leitung mit elektrischer Energie und Steuersignalen versorgbar ist und der mittels eines Reibrades oder Kettenrades in Eingriff mit dem Führungsmittel steht.

In einer weiteren Ausgestaltung der Vorrichtung sind zwei parallele Führungsmittel vorgesehen, die gemeinsam die Bearbeitungseinheit tragen und führen. Zum einen werden so die Lasten auf zwei Führungsmittel verteilt, was die Belastung für das einzelne Führungsmittel vermindert, und zum zweiten wird so die Möglichkeit geschaffen, die Bearbeitungseinheit in einer exakten und festlegbaren Orientierung innerhalb des zu bearbeitenden Bauteils zu führen. Störende Pendelbewegungen der Bearbeitungseinheit, wie sie bei einem einzelnen Führungsmittel auftreten könnten, werden so sicher vermieden.

Weiter ist für die Vorrichtung bevorzugt vorgesehen, daß die Bearbeitungseinheit mindestens einen Bearbeitungskopf aufweist, der relativ zur übrigen Bearbeitungseinheit verstellbar ist. Damit wird die Möglichkeit geschaffen, dem Bearbeitungskopf relativ zur übrigen Bearbeitungseinheit eine gewünschte Ausrichtung zu geben, die für einen jeweils auszuführenden Bearbeitungsvorgang optimal ist.

Eine weitere Ausgestaltung dazu schlägt vor, daß der Bearbeitungskopf relativ zur übrigen Bearbeitungseinheit durch einen integrierten Kopfaritrieb schwenkbar oder rotierbar ist. Mit dieser Ausgestaltung wird insbesondere die Möglichkeit geschaffen, bei stillstehendem Bauteil einen größeren Flächenbereich oder sogar die gesamte innere Oberfläche des Bauteils durch den Bearbeitungskopf zu bearbeiten.

Für die erfindungsgemäße Vorrichtung ist weiter vorgesehen, daß sie einen Bauteilträger umfaßt, an dem das Bauteil über zumindest je eine stirnendseitige Bauteilaufnahme aufnehmbar ist. Die stirnendseitigen Bauteilaufnahmen haben den Vorteil, daß sowohl die innere Oberfläche als auch die äußere Oberfläche des rohrförmigen Bauteils von Bauteilaufnahmen frei bleiben und so ungestört bearbeitet werden können.

Bevorzugt ist dabei vorgesehen, daß der Bauteilträger Bauteilaufnahmen für eine um die Bauteillängsachse drehbare Lagerung des Bauteils aufweist. Hiermit wird die vorteilhafte Möglichkeit geschaffen, das Bauteil während seiner Bearbeitung um seine Längsachse zu drehen. Dabei kann dann die Bearbeitungseinheit in Drehrichtung des Bauteils gesehen ihre Stellung beibehalten, da die innere Oberfläche des Bauteils durch dessen Drehung an der Bearbeitungseinheit vorbei bewegt wird. Die Bearbeitungseinheit muß dann lediglich in Längsrichtung des Bauteils verfahren werden, wodurch dann nach und nach die gesamte innere Oberfläche des Bauteils entlang einer schraubenförmigen Linie bearbeitet werden kann.

Eine weitere Ausführung schlägt vor, daß die Bauteilaufnahmen so positioniert sind, daß das darin aufgenommene Bauteil bei in seiner Längsrichtung konischer Ausführung mit seiner Oberseite in einer horizontalen Lage und mit seiner Unterseite in einer zur Horizontalen geneigten Lage liegt. Diese Ausgestaltung der Vorrichtung hat insbesondere dann Vorteile, wenn für die Bearbeitung der inneren Oberfläche des Bauteils Stoffe verwendet oder eingesetzt werden, die aus dem Inneren des Bauteils wieder entfernt werden müssen. Die Neigung der Unterseite des Bauteils sorgt in Verbindung mit der Rotation des Bauteils dafür, daß schüttfähige oder fließfähige Arbeitsstoffe in Richtung des Gefälles der Unterseite zu dem tiefsten Ende der Unterseite des Bauteils wandern und dort dann aus dem Bauteil herausfallen oder entnommen werden können.

Alternativ ist vorgesehen, daß der Bauteilträger oder dessen Bauteilaufnahmen so verstellbar ist/sind, daß das Bauteil zwischen einer horizontalen Lage und einer zur Horizontalrichtung um bis zu 5° geneigten Lage bewegbar ist. Diese Ausführung der Vorrichtung ist dann zweckmäßig, wenn das Bauteil über seine Länge gesehen einen konstanten Durchmesser aufweist oder wenn das Gefälle bei einem konischen Bauteil mit horizontal ausgerichteter Oberseite für den im vorhergehenden Absatz angesprochenen gewünschten Förderzweck nicht ausreicht.

Wie weiter oben beschrieben, muß das Führungsmittel bzw. jedes Führungsmittel zur Erfüllung seiner Funktion endseitig befestigt und unter Zugspannung gesetzt werden. In dieser Hinsicht schlägt eine Ausführung der Vorrichtung vor, daß Befestigungspunkte für die endseitige Festlegung des Führungsmittels an den stirnendseitigen Bauteilaufnahmen vorgesehen sind. Diese Ausführung ergibt eine sehr kompakte Bauweise. Gleichzeitig kann das Bauteil selbst dazu herangezogen werden, die Zugkräfte für das Spannen des Führungsmittels oder der Führungsmittel aufzunehmen, indem sie als Schubkräfte über die stirnendseitigen Bauteilaufnahmen in das Bauteil eingeleitet werden. Bei entsprechend großer Stabilität des Bauteils kann dieses die für das Spannen des Führungsmittels erforderlichen Kräfte schadlos aufnehmen.

Alternativ können Befestigungspunkte für die endseitige Festlegung des Führungsmittels an vom Bauteil entkoppelten Stellen der Vorrichtung oder an einem die Vorrichtung aufnehmenden Bauwerk vorgesehen sein. In dieser Ausführung ist das Spannen des Führungsmittels unabhängig vom Bauteil, so daß auch leichte Bauteile, die nur geringe Kräfte in Axialrichtung aufnehmen können, in der Vorrichtung problemlos bearbeitet werden können.

Um das Führungsmittel möglichst schnell und einfach spannen zu können, ist für die Vorrichtung bevorzugt vorgesehen, daß sie mindestens eine mit einem Kraftantrieb betätigbare Spanneinrichtung für das Führungsmittel umfaßt. Bevorzugt ist dabei der Kraftantrieb entweder motorisch ausgeführt oder umfaßt eine pneumatische oder hydraulische Kolben-Zylinder-Einheit.

Für die Vorrichtung ist weiter bevorzugt vorgesehen, daß die Bearbeitungseinheit für ein Strahlen der inneren Oberfläche des Bauteils mit einem Strahlmittel eingerichtet ist.

Eine andere bevorzugte Ausgestaltung sieht vor, daß die Bearbeitungseinheit für ein Beschichten der inneren Oberfläche des Bauteils mit einem flüssigen oder pulverförmigen Beschichtungsstoff eingerichet ist.

Um eine besonders zeitsparende Bearbeitung von rohrförmigen Bauteilen zu erreichen, ist für die Vorrichtung schließlich noch vorgesehen, daß sie weiterhin eine Außenbearbeitungseinheit umfaßt, die außerhalb des Bauteils für die Bearbeitung von dessen äußerer Oberfläche relativ zu dieser verfahrbar ist. Damit können die innere Oberfläche und die äußere Oberfläche des rohrförmigen Bauteils synchron bearbeitet werden.

Selbstverständlich besteht die Möglichkeit, in der Vorrichtung mit Abstand zueinander zwei oder noch mehr Bearbeitungseinheiten an demselben Führungsmittel oder an individuellen Führungsmitteln zu halten und zu führen, um eine synchrone Bearbeitung von mehreren Oberflächenbereichen der inneren Oberfläche des Bauteils zu ermöglichen. In analoger Weise können zwei oder mehr Außenbearbeitungseinheiten in der Vorrichtung vorgesehen sein, um auch an der äußeren Oberfläche des Bauteils mehrere Oberflächenbereiche zeitgleich bearbeiten zu können.

Im Folgenden wird ein Ausführungsbeispiel der Erfindung anhand einer Zeichnung erläutert. Die Figuren der Zeichnung zeigen:
- Figur 1: die Vorrichtung in Seitenansicht zusammen mit einem längs geschnitten dargestellten rohrförmigen Bauteil und
- Figur 2: die Vorrichtung aus Figur 1 zusammen mit dem Bauteil in einer Stirnansicht auf das in Figur 1 linke Stirnende der Vorrichtung.

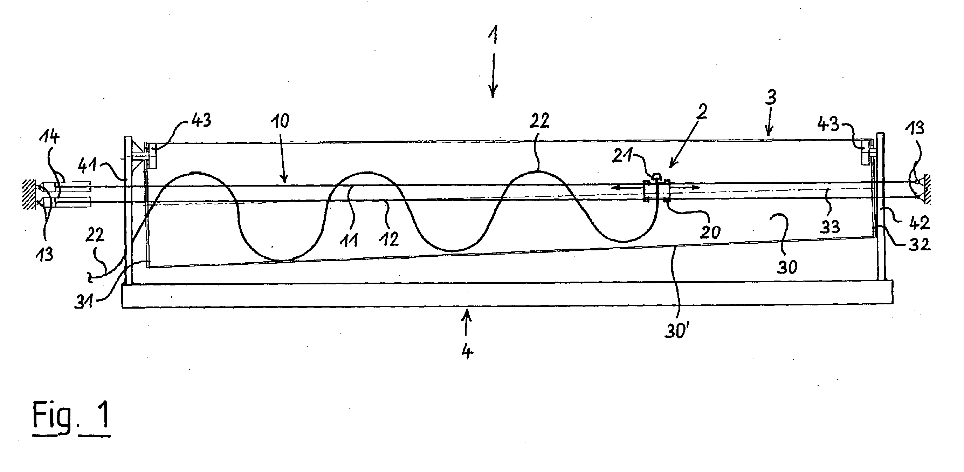

Wie die Figur 1 zeigt, umfaßt die Vorrichtung 1 einen Bauteilträger 4 mit je einer stirnendseitigen Bauteilaufnahme 41 und 42. Mittels dieser Bauteilaufnahmen 41 und 42 ist ein rohrförmiges, hier über seine Länge gesehen konisches Bauteil 3 im Bauteilträger 4 gehalten und gelagert. Die Bauteilaufnahmen 41 und 42 umfassen jeweils mindestens eine Tragrolle 43, von denen mindestens eine drehantreibbar ist. Auf diese Weise kann das im Bauteilträger 4 gehaltene Bauteil 3 um seine Längsmittelachse 33 gedreht werden.

Das Bauteil 3 ist hier z.B. eine Rohrmastsektion einer Windkraftanlage. In der Praxis kann ein solches Bauteil 3 eine Länge von etwa 50 m aufweisen.

In Längsrichtung des Bauteils 3 läuft durch dieses hindurch eine Führungseinrichtung 10. Die Führungseinrichtung 10 besteht hier aus zwei flexiblen Führungsmitteln 11 und 12, die beispielsweise Seile, Ketten oder Gurte sein können und die parallel zueinander verlaufen. Weiterhin sind die beiden Führungsmittel 11 und 12 an ihren Stirnenden an Befestigungspunkten 13 festgelegt, die hier z.B. an einem die Vorrichtung 1 aufnehmenden Gebäude, das im übrigen nicht weiter dargestellt ist, angebracht sind. Den beiden in Figur 1 linken Befestigungspunkten 13 ist je Führungsmittel 11, 12 eine Spanneinrichtung 14 zugeordnet, beispielsweise eine Kolben-Zylinder-Einheit. Mittels der Spanneinrichtungen 14 können die beiden Führungsmittel 11 und 12 unter eine Zugspannung gesetzt werden, nachdem sie an den Befestigungspunkten 13 angebracht worden sind.

An der durch die Führungsmittel 11 und 12 gebildeten Führungseinrichtung 10 ist eine Bearbeitungseinheit 2 mittels eines integrierten Tragwagens 20 in Längsrichtung der Führungseinrichtung 10 verfahrbar getragen. Die Bearbeitungseinheit 2 umfaßt im hier dargestellten Ausführungsbeispiel einen Bearbeitungskopf 21, der hier nach oben in Richtung zur inneren Oberfläche 30 des rohrförmigen Bauteils 3 weist.

Die Bearbeitungseinheit 2 und deren Bearbeitungskopf 21 sind mit einer flexiblen Leitung 22 verbunden, die durch das hohle Innere des Bauteils 3 verläuft und die an dem in Figur 1 linken Stirnende des Bauteils 3 aus diesem herausgeführt ist. In nicht dargestellter Weise ist diese flexible Leitung 4 mit einer außerhalb des Bauteils 3 angeordneten, einen Teil der Vorrichtung 1 bildenden Versorgungseinheit verbunden, von der aus die Bearbeitungseinheit 2 mit Energie und/oder wenigstens einem Arbeitsstoff versorgbar ist, die/der für das gewünschte Bearbeiten der inneren Oberfläche des Bauteils 3 benötigt wird. Bei der zugeführten Energie kann es sich beispielsweise um Druckluft oder elektrischen Strom handeln, um beispielsweise einen Fahrantrieb des Tragwagens 20 für die Bearbeitungseinheit 2 anzutreiben und so die Bearbeitungseinheit 2 in Längsrichtung der Führungseinrichtung 10 zu verfahren. Weiterhin kann der über die flexible Leitung 22 zugeführte Arbeitsstoff beispielsweise ein mit Druckluft vermischtes körniges Strahlmittel zum Strahlen der inneren Oberfläche 30 des Bauteils 3 oder ein pulverförmiger oder flüssiger Beschichtungsstoff sein.

Der Bearbeitungskopf 21 kann in einer einfachen Ausführung der Bearbeitungseinheit 2 fest angeordnet sein; alternativ kann der Bearbeitungskopf 21 auch relativ zur übrigen Bearbeitungseinheit 2 verstellbar und fixierbar oder auch während eines Bearbeitungsvorganges bewegbar, beispielsweise verschwenkbar oder rotierbar sein.

Wie oben erwähnt, ist das Bauteil 3 drehbar gelagert. Durch Rotieren des Bauteils 3 und gleichzeitiges axiales Verfahren der Bearbeitungseinheit 2 kann die innere Oberfläche 30 des rohrförmigen Bauteils 3 entlang einer schraubenförmigen Linie vollflächig mit der Bearbeitungseinheit 2 bearbeitet werden, ohne daß Arbeitskräfte sich in das Innere des Bauteils 3 begeben müssen.

Die flexible Leitung 22 kann während des axialen Verfahrens der Bearbeitungseinheit 2 beispielsweise durch eine außerhalb des Bauteils 3 links von dessen linkem Stirnende angeordnete Einrichtung synchron zur aktuellen Position der Bearbeitungseinheit 2 aufgenommen oder abgegeben werden, um Knicke in der Leitung 22, die die Funktion der Vorrichtung 1 stören würden, zu vermeiden. Außerdem wird so vermieden, daß die Leitung 22 mit bereits bearbeiteten Bereichen der inneren Oberfläche 30 des Bauteils 3 in Kontakt kommt und beispielsweise eine dort aufgebrachte frische Beschichtung beschädigt.

Wenn die Bearbeitung der inneren Oberfläche 30 des Bauteils 3 abgeschlossen ist, wird die Bearbeitungseinheit 2 aus dem Bauteil 3 nach links hin herausgefahren und entweder von der Führungseinrichtung 10 getrennt oder in einer nicht gezeigten Parkhalterung plaziert. Nach Entspannen der Spanneinrichtung 14 können die beiden Führungsmittel 11 und 12 von ihren Befestigungspunkten 13 ein- oder beidseitig gelöst werden und aus dem Inneren des Bauteils 3 entfernt werden.

Das Entfernen und auch das Einbringen der Führungseinrichtung 10 in das Bauteil 3 vor Beginn der Bearbeitung der inneren Oberfläche 30 erfordert in Axialrichtung des Bauteils 3 gesehen nur wenig Raum, weil die Führungseinrichtung 10 aufgrund der Flexibilität der Führungsmittel 11 und 12 vorzugsweise aufgewickelt und abgewickelt wird. Insbesondere wird so ein sehr großer Platzbedarf in Axialrichtung, wie ihn starre Lanzen zur Führung der Bearbeitungseinheit erfordert, vermieden.

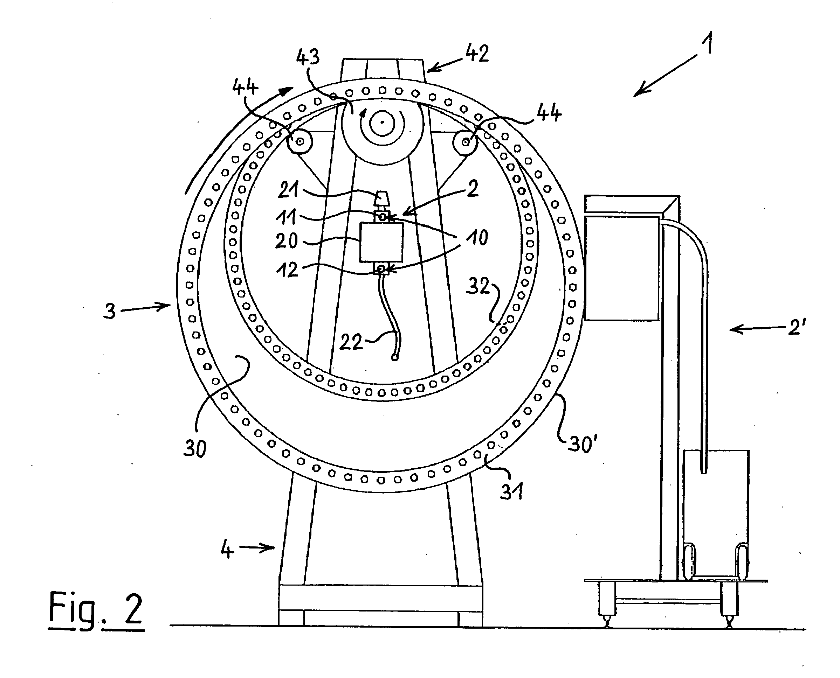

Figur 2 zeigt die Vorrichtung 1 aus Figur 1 in einer Stirnansicht auf das in Figur 1 linke Stirnende der Vorrichtung 1 und des Bauteils 3. Dem Betrachter zugewandt ist nun das Stirnende 31 des Bauteils 3 mit dem größeren Durchmesser, während das andere Stirnende 32 mit dem kleineren Durchmesser im Hintergrund liegt. Die dem in Figur 2 vorderen Stirnende 31 zugeordnete Bauteilaufnahme 41 ist hier aus Gründen der Übersichtlichkeit weggelassen.

Im Hintergrund befindet sich die Bauteilaufnahme 42 für das zweite Stirnende 32 des Bauteils 3, wobei die Bauteilaufnahme 42 einen Teil des Bauteilträgers 4 bildet.

Ganz oben an der Bauteilaufnahme 42 ist die Tragrolle 43 für das Stirnende 32 des Bauteils 3 drehbar gelagert. Mittels eines hier nicht weiter dargestellten Drehantriebes, z. B. ein Elektromotor, kann die Rolle 43 in Drehung versetzt werden um des Bauteil 3 zu rotieren. In Umfangsrichtung des Bauteils 3 gesehen links und rechts von der Tragrolle 43 sind zwei Führungsrollen 44 angeordnet, die für eine Zentrierung des Bauteils 3 an der Bauteilaufnahme 42 sorgen.

In Längsrichtung des Bauteils 3 und damit hier senkrecht zur Zeichnungsebene verläuft die durch die beiden flexiblen Führungsmittel 10 und 11 gebildete Führungseinrichtung 10. An den beiden Führungsmitteln 11 und 12, hier z.B. Stahlseile, ist die Bearbeitungseinheit 2 mittels ihres Tragwagens 20 in Längsrichtung der Führungseinrichtung 10, also in einer Richtung senkrecht zur Zeichnungsebene, verfahrbar gehalten. Nach oben hin geht von der Bearbeitungseinheit 2 deren Bearbeitungskopf 21 aus, durch den ein Arbeitsstoff, z. B. ein Strahlmittel oder ein Beschichtungsstoff, auf die innere Oberfläche 30 des Bauteils 3 aufbringbar ist. Außerdem ist in Figur 2 unterhalb der Bearbeitungseinheit 2 die flexible Leitung 22 zur Versorgung der Bearbeitungseinheit 2 mit Energie und/oder Arbeitsstoff zu erkennen.

Wie die Figuren 1 und 2 weiter verdeutlichen, ist hier das über seine Länge gesehen konische Bauteil 3 in dem Bauteilträger 4 so aufgenommen, daß die Oberseite des Bauteils 3 horizontal verläuft, wodurch sich zwangsläufig ein geneigter Verlauf der Unterseite des Bauteils 3 ergibt. Diese Neigung dient beispielsweise dazu, ein für die Bearbeitung der inneren Oberfläche 30 des Bauteils 3 eingesetztes Strahlmittel durch die Rotation des Bauteils 3 zum tiefsten Punkt des hohlen Inneren des Bauteils 3, gemäß Figur 1 zum linken Stirnende 31, zu fördern, um es dort aus dem Bauteil 3 entnehmen, beispielsweise absaugen, zu können.

Figur 2 schließlich zeigt ganz rechts noch zusätzlich eine äußere Bearbeitungseinheit 2', die parallel zur äußeren Oberfläche 30' des Bauteils 3 verfahrbar ist. Mit der äußeren Bearbeitungseinheit 2' kann parallel zur Bearbeitung der inneren Oberfläche 30 des Bauteils 3 durch die innere Bearbeitungseinheit 2 die äußere Oberfläche 30' des Bauteils 3 bearbeitet werden.

### Bezugszeichenliste:

| Zeichen | Bezeichnung |
|---|---|
| 1 | Vorrichtung insgesamt |
| 10 | Führungseinrichtung |
| 11 | erstes Führungsmittel (Seil) |
| 12 | zweites Führungsmittel (Seil) |
| 13 | Befestigungspunkte |
| 14 | Spanneinrichtung |
| | |
| 2 | Bearbeitungseinheit innen |
| 2' | Bearbeitungseinheit außen |
| 20 | Tragwagen |
| 21 | Bearbeitungskopf |
| 22 | flexible Leitung |
| | |
| 3 | Bauteil |
| 30 | innere Oberfläche |
| 30' | äußere Oberfläche |
| 31 | erstes Stirnende |
| 32 | zweites Stirnende |
| 33 | Längsmittelachse |
| | |
| 4 | Bauteilträger |
| 41 | erste Bauteilaufnahme |
| 42 | zweite Bauteilaufnahme |
| 43 | Trag- und Antriebsrolle |
| 44 | Führungsrollen |

## Patentansprüche

1. Vorrichtung (1) zum Bearbeiten der inneren Oberfläche (30) von rohrförmigen Bauteilen (3), insbesondere von Rohrmastsektionen für Windkraftanlagen, wobei die Vorrichtung (1) eine Führungseinrichtung (10) umfaßt, die während des Bearbeitens längs durch das Innere des Bauteils (3) verläuft und an der entlang oder mit der mindestens eine Bearbeitungseinheit (2) durch das Bauteil (3) bewegbar ist,
**dadurch gekennzeichnet,**
**daß** die Führungseinrichtung (10) durch mindestens ein flexibles, an seinen Enden festlegbares und unter Zugspannung setzbares Führungsmittel (11, 12) gebildet ist.

2. Vorrichtung nach Anspruch 1, **dadurch gekennzeichnet, daß** das Führungsmittel (11, 12) ein Seil oder eine Kette oder ein Gurt ist.

3. Vorrichtung nach Anspruch 1 oder 2, **dadurch gekennzeichnet, daß** die Bearbeitungseinheit (2) einen in Längsrichtung des Führungsmittels (11, 12) an diesem verfahrbaren Tragwagen (20) umfaßt.

4. Vorrichtung nach einem der vorhergehenden Ansprüche, **dadurch gekennzeichnet, daß** die Bearbeitungseinheit (2) über mindestens eine flexible Leitung (22) mit einer außerhalb des Bauteils (3) angeordneten Versorgungseinheit der Vorrichtung (1) verbunden und von dieser mit Energie und/oder wenigstens einem Arbeitsstoff versorgbar ist, die/der für das Bearbeiten benötigt wird.

5. Vorrichtung nach Anspruch 4, **dadurch gekennzeichnet, daß** die mindestens eine flexible Leitung (22) an dem Führungsmittel (11, 12) in dessen Längsrichtung bewegbar getragen und **dadurch gekennzeichnet ist**.

6. Vorrichtung nach Anspruch 4 oder 5, **dadurch gekennzeichnet, daß** über eine außerhalb des Bauteils (3) angeordnete Leitungsnachführeinheit die mindestens eine flexible Leitung (22) synchron zu axialen Verfahrbewegungen der Bearbeitungseinheit (2) ausgebbar und rückziehbar ist.

7. Vorrichtung nach einem der Ansprüche 3 bis 6, **dadurch gekennzeichnet, daß** neben dem Führungsmittel (11, 12) ein Zugmittel vorgesehen ist, das mit dem Tragwagen (20) und mit einer außerhalb des Bauteils (3) angeordneten Zugmittelantriebseinheit der Vorrichtung (1) verbunden ist.

8. Vorrichtung nach einem der Ansprüche 3 bis 6, **dadurch gekennzeichnet, daß** der Tragwagen (20) einen integrierten Antrieb für das Verfahren der Bearbeitungseinheit (2) entlang des Führungsmittels (11, 12) aufweist.

9. Vorrichtung nach einem der vorhergehenden Ansprüche, **dadurch gekennzeichnet, daß** zwei parallele Führungsmittel (11 und 12) vorgesehen sind, die gemeinsam die Bearbeitungseinheit (2) tragen und führen.

10. Vorrichtung nach einem der vorhergehenden Ansprüche, **dadurch gekennzeichnet, daß** die Bearbeitungseinheit (2) mindestens einen Bearbeitungskopf (21) aufweist, der relativ zur übrigen Bearbeitungseinheit (2) verstellbar ist.

11. Vorrichtung nach Anspruch 10, **dadurch gekennzeichnet, daß** der Bearbeitungskopf (21) relativ zur übrigen Bearbeitungseinheit (2) durch einen integrierten Kopfantrieb schwenkbar oder rotierbar ist.

12. Vorrichtung nach einem der vorhergehenden Ansprüche, **dadurch gekennzeichnet, daß** sie einen Bauteilträger (4) umfaßt, an dem das Bauteil (3) über zumindest je eine stirnendseitige Bauteilaufnahme (41 und 42) aufnehmbar ist.

13. Vorrichtung nach Anspruch 12, **dadurch gekennzeichnet, daß** der Bauteilträger (4) Bauteilaufnahmen (41, 42) für eine um die Bauteillängsachse (33) drehbare Lagerung des Bauteils (3) aufweist.

14. Vorrichtung nach Anspruch 12 oder 13, **dadurch gekennzeichnet, daß** die Bauteilaufnahmen (41, 42) so positioniert sind, daß das darin aufgenommene Bauteil (3) bei in seiner Längsrichtung konischer Ausführung mit seiner Oberseite in einer horizontalen Lage und mit seiner Unterseite in einer zur Horizontalen geneigten Lage liegt.

15. Vorrichtung nach Anspruch 12 oder 13, **dadurch gekennzeichnet, daß** der Bauteilträger (4) oder dessen Bauteilaufnahmen (41, 42) so verstellbar ist/sind, daß das Bauteil (3) zwischen einer horizontalen Lage und einer zur Horizontalrichtung um bis zu 5° geneigten Lage bewegbar ist.

16. Vorrichtung nach einem der Ansprüche 12 bis 15, **dadurch gekennzeichnet, daß** Befestigungspunkte (13) für die endseitige Festlegung des Führungsmittels (11, 12) an den stirnendseitigen Bauteilaufnahmen (41, 42) vorgesehen sind.

17. Vorrichtung nach einem der Ansprüche 1 bis 15, **dadurch gekennzeichnet, daß** Befestigungspunkte (13) für die endseitige Festlegung des Führungsmittels (11, 12) an vom Bauteil (3) entkoppelten Stellen der Vorrichtung (1) oder an einem die Vorrichtung (1) aufnehmenden Bauwerk vorgesehen sind.

18. Vorrichtung nach einem der vorhergehenden Ansprüche, **dadurch gekennzeichnet, daß** sie mindestens eine mit einem Kraftantrieb betätigbare Spanneinrichtung (14) für das Führungsmittel (11, 12) umfaßt.

19. Vorrichtung nach einem der vorhergehenden Ansprüche, **dadurch gekennzeichnet, daß** die Bearbeitungseinheit (2) für ein Strahlen der inneren Oberfläche (30) des Bauteils (3) mit einem Strahlmittel eingerichtet ist.

20. Vorrichtung nach einem der vorhergehenden Ansprüche, **dadurch gekennzeichnet, daß** die Bearbeitungseinheit (3) für ein Beschichten der inneren Oberfläche (30) des Bauteils (3) mit einem flüssigen oder pulverförmigen Beschichtungsstoff eingerichtet ist.

21. Vorrichtung nach einem der vorhergehenden Ansprüche, **dadurch gekennzeichnet, daß** sie weiterhin eine Außenbearbeitungseinheit (2') umfaßt, die außerhalb des Bauteils (3) für die Bearbeitung von dessen äußerer Oberfläche (30') relativ zu dieser verfahrbar ist.
